# EUROPEAN PATENT APPLICATION

(11) **EP 4 273 959 A1**
(43) Date of publication of application: **08.11.2023**
(21) Application number: 22776101.2
(22) Date of filing: 23.03.2022
(51) Int. Cl.: H01M 4/36, H01M 4/525, H01M 4/505, H01M 4/62, H01M 10/052, C01G 53/00

(54) **POSITIVE ELECTRODE ACTIVE MATERIAL FOR LITHIUM SECONDARY BATTERY, MANUFACTURING METHOD THEREFOR, POSITIVE ELECTRODE FOR LITHIUM SECONDARY BATTERY, COMPRISING SAME, AND LITHIUM SECONDARY BATTERY**

(30) Priority: 23.03.2021 KR 20210037588
(71) Applicant: Lg Chem, Ltd., Seoul 07336 (KR)
(72) Inventor: JUN, Tae Hwan, Daejeon 34122 (KR); JUNG, Hae Jong, Daejeon 34122 (KR); KIM, Gyun Joong, Daejeon 34122 (KR); OH, Myoung Hwan, Daejeon 34122 (KR)
(74) Representative: Hoffmann Eitle
(86) International application number: PCT/KR2022/004088
(87) International publication number: WO 2022/203401

(57) **Abstract**

The present invention aims at providing a high-nickel positive electrode active material in which stability and initial capacity are improved and crack generation at an interface between primary particles is also suppressed, a preparation method thereof, and a positive electrode and a lithium secondary battery which include the positive electrode active material.

Also, the present invention aims at providing a high-nickel positive electrode active material in which a washing process may be omitted by reducing an amount of lithium impurities, a preparation method thereof, and a positive electrode and a lithium secondary battery which include the positive electrode active material.

## Description

### TECHNICAL FIELD

### Cross-reference to Related Applications

This application claims priority from Korean Patent Application No. 10-2021-0037588, filed on March 23, 2021, the disclosure of which is incorporated by reference herein.

### Technical Field

The present invention relates to a positive electrode active material including a high-nickel (high-Ni)-based lithium transition metal oxide and a preparation method thereof.

### BACKGROUND ART

With the recent technological development of electric vehicles, demand for high-capacity secondary batteries is increasing, and, accordingly, research on a high-nickel (high-Ni)-based positive electrode active material having excellent capacity characteristics is being actively conducted.

A positive electrode active material is generally prepared by mixing a lithium-containing raw material with a transition metal hydroxide and then sintering the mixture, wherein a sintering temperature must be low when a high-Ni-based positive electrode active material with a high nickel content is prepared, and, accordingly, a residual amount of a lithium by-product, such as lithium carbonate and lithium hydroxide, is increased during the preparation of the high-Ni-based positive electrode active material with a high nickel content. The lithium by-product may react with an electrolyte solution in a secondary battery to degrade performance of the battery and generate gas, and may cause a gelation phenomenon during preparation of an electrode slurry.

Therefore, in general, a washing process is performed to remove the lithium by-product, such as lithium carbonate and lithium hydroxide, remaining on a particle surface after a sintering process when the high-Ni-based positive electrode active material is prepared. Also, after the washing process, boron coating is usually performed to secure stability and initial performance of the positive electrode active material. However, in a case in which the boron coating is performed, cracks occur between primary particles of lithium transition metal oxide to cause problems, such as gas generation and degradation of cycle characteristics of the battery, when the positive electrode active material is used in the battery.

To solve these problems, a method of forming a coating layer formed of lithium cobalt oxide has been proposed, but, in this case, it is difficult to reduce costs due to high raw material cost. Also, in a case in which a coating layer formed of lithium manganese oxide is formed, there is a disadvantage in that initial capacity is reduced.

Furthermore, in a case in which the washing process is performed as described above, the lithium by-product is removed, but lithium ions in the positive electrode active material escape and form NiO or NiOOH on a surface portion of the positive electrode active material to cause a change in structure of the lithium transition metal oxide, and, as a result, capacity of the lithium secondary battery may be reduced.

### DISCLOSURE OF THE INVENTION

### TECHNICAL PROBLEM

An aspect of the present invention provides a high-nickel-based positive electrode active material capable of improving stability and initial capacity of a lithium secondary battery and suppressing crack generation at an interface between primary particles, a preparation method thereof, and a positive electrode and a lithium secondary battery which include the positive electrode active material.

Another aspect of the present invention provides a method of preparing a high-nickel-based positive electrode active material which may omit a washing process by reducing an amount of a lithium by-product, a positive electrode active material prepared therefrom, and a positive electrode and a lithium secondary battery which include the positive electrode active material.

### TECHNICAL SOLUTION

In order to solve the above-described tasks, the present invention provides a positive electrode active material, a method of preparing a positive electrode active material, a positive electrode, and a lithium secondary battery.
(1) The present invention provides a positive electrode active material including: a lithium transition metal oxide which is in a form of a secondary particle, in which a plurality of primary particles are aggregated, and has an amount of nickel among metallic elements excluding lithium of 80 atm% or more; a first coating layer which is formed on a surface of the secondary particle of the lithium transition metal oxide and surfaces of a portion or all of the plurality of primary particles, contains nickel and manganese, and has a layered structure; and a second coating layer which is formed on an outer surface of the first coating layer and contains boron.
(2) The present invention provides the positive electrode active material of (1) above, wherein the lithium transition metal oxide has a composition represented by Formula 1.

   [Formula 1] LiₐNi_{b}Co_{c}M¹_{d}M²ₑO₂

   In Formula 1,
   M¹ is at least one selected from manganese (Mn) and aluminum (Al),
   M² is at least one selected from the group consisting of zirconium (Zr), boron (B), tungsten (W), molybdenum (Mo), chromium (Cr), niobium (Nb), magnesium (Mg), hafnium (Hf), tantalum (Ta), lanthanum (La), titanium (Ti), strontium (Sr), barium (Ba), cerium (Ce), fluorine (F), phosphorus (P), sulfur (S), and yttrium (Y), and
   0.9≤a≤1.3, 0.80≤b<1.0, 0<c≤0.2, 0<d≤0.2, and 0≤e≤0.1.
(3) The present invention provides the positive electrode active material of (1) or (2) above, wherein the primary particle has an average particle diameter of 0.1 um to 0.5 µm.
(4) The present invention provides the positive electrode active material of any one of (1) to (3) above, wherein the secondary particle has an average particle diameter (D₅₀) of 8 um to 15 µm.
(5) The present invention provides the positive electrode active material of any one of (1) to (4) above, wherein the first coating layer has an average thickness of 10 nm to 200 nm.
(6) The present invention provides the positive electrode active material of any one of (1) to (5) above, wherein the first coating layer has a composition represented by Formula 2.

   [Formula 2] Liₓ[Ni_{z}Mn_{w}]_{y}O₂

   In Formula 2, 0.8≤x≤1.2, 0.8≤y≤1.2, 0.1≤z≤0.9, and 0.1≤w≤0.9.
(7) The present invention provides the positive electrode active material of any one of (1) to (6) above, wherein a molar ratio of nickel : manganese, which are included in the first coating layer, is in a range of 1:9 to 9:1.
(8) The present invention provides the positive electrode active material of any one of (1) to (7) above, wherein the molar ratio of nickel : manganese, which are included in the first coating layer, is in a range of 5:5 to 9:1.
(9) The present invention provides the positive electrode active material of any one of (1) to (8) above, wherein the first coating layer is included in an amount of 1 part by weight to 5 parts by weight based on 100 parts by weight of the lithium transition metal oxide.
(10) The present invention provides the positive electrode active material of any one of (1) to (9) above, wherein the second coating layer includes at least one selected from the group consisting of lithium boron oxide and boron oxide.
(11) The present invention provides the positive electrode active material of any one of (1) to (10) above, wherein the second coating layer is included in an amount of 0.01 part by weight to 1 part by weight based on 100 parts by weight of the lithium transition metal oxide.
(12) The present invention provides the positive electrode active material of any one of (1) to (11) above, wherein an amount of a lithium by-product remaining on a surface is 1 wt% or less based on a total weight of the positive electrode active material.
(13) The present invention provides a method of preparing a positive electrode active material which includes: preparing a lithium transition metal oxide which is in a form of a secondary particle, in which a plurality of primary particles are aggregated, and has an amount of nickel among metallic elements excluding lithium of 80 atm% or more; mixing the lithium transition metal oxide with a solution containing a nickel raw material and a manganese raw material and performing a first heat treatment to form a first coating layer containing nickel and manganese and having a layered structure on a surface of the secondary particle of the lithium transition metal oxide and surfaces of a portion or all of the plurality of primary particles; and mixing the lithium transition metal oxide having the first coating layer formed thereon with a boron raw material and performing a second heat treatment to form a second coating layer containing boron on an outer surface of the first coating layer.
(14) The present invention provides the method of preparing a positive electrode active material of (13) above, wherein the preparing of the lithium transition metal oxide is performed by mixing a lithium raw material with a positive electrode active material precursor and sintering the mixture.
(15) The present invention provides the method of preparing a positive electrode active material of any one of (13) or (14) above, wherein the preparing of the lithium transition metal oxide does not include a washing process.
(16) The present invention provides the method of preparing a positive electrode active material of any one of (13) to (15) above, wherein the nickel raw material is nickel nitrate, and the manganese raw material is manganese nitrate.
(17) The present invention provides the method of preparing a positive electrode active material of any one of (13) to (16) above, wherein the first heat treatment is performed at 650°C to 850°C.
(18) The present invention provides the method of preparing a positive electrode active material of any one of (13) to (17) above, wherein the boron raw material is boric acid.
(19) The present invention provides the method of preparing a positive electrode active material of any one of (13) to (18) above, wherein the second heat treatment is performed at 150°C to 500°C.
(20) The present invention provides a positive electrode including the positive electrode active material of any one of (1) to (12).
(21) The present invention provides a lithium secondary battery including the positive electrode of (20), a negative electrode, a separator disposed between the positive electrode and the negative electrode, and an electrolyte.

### ADVANTAGEOUS EFFECTS

A high-nickel-based positive electrode active material according to the present invention may improve stability and initial capacity of a lithium secondary battery, and may also improve cycle characteristics of the battery by suppressing crack generation at an interface between primary particles.

Also, according to a method of preparing the high-nickel-based positive electrode active material according to the present invention, since a washing process may be omitted by reducing an amount of a lithium by-product, problems caused by the washing process may be solved and equipment and processing costs may be reduced.

Thus, the high-nickel-based positive electrode active material according to the present invention may be suitably used in a lithium secondary battery by being used in a positive electrode.

### BRIEF DESCRIPTION OF THE DRAWINGS

FIG. 1 is an electron probe micro-analysis (EPMA) result of a particle after forming a first coating layer (before forming a second coating layer) on a lithium transition metal oxide according to Example 1;
FIG. 2 is a transmission electron microscope (TEM) image of the particle after forming the first coating layer (before forming the second coating layer) on the lithium transition metal oxide according to Example 1;
FIG. 3 is a transmission electron microscope (TEM) image of a particle after forming a first coating layer (before forming a second coating layer) on a lithium transition metal oxide according to Comparative Example 1; and
FIG. 4 is an X-ray photoelectron spectroscopy (XPS) result of a positive electrode active material on which the first coating layer and the second coating layer are formed according to Example 1.

### MODE FOR CARRYING OUT THE INVENTION

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

It will be further understood that the terms "include," "comprise," or "have" in this specification specify the presence of stated features, numbers, steps, elements, or combinations thereof, but do not preclude the presence or addition of one or more other features, numbers, steps, elements, or combinations thereof.

Hereinafter, the present invention will be described in more detail.

In the present invention, the expression "primary particle" denotes a smallest particle unit which is distinguished as one body when a cross section of a positive electrode active material is observed through a scanning electron microscope (SEM), wherein it may be composed of a single grain, or may also be composed of a plurality of grains.

In the present invention, an average particle diameter of the primary particle is an arithmetic average value of values which are obtained by measuring a size of each primary particle distinguished from a cross-sectional SEM image of the positive electrode active material particles, which is obtained by using a scanning electron microscope (SEM), using an Image J program.

In the present invention, the expression "secondary particle" denotes a secondary structure formed by aggregation of a plurality of primary particles.

In the present invention, an average particle diameter (D₅₀) of the secondary particle is a particle diameter at a cumulative volume of 50% in a particle size distribution curve. The average particle diameter (D₅₀) of the secondary particle may be obtained by using a laser diffraction method. Specifically, after dispersing positive electrode active material particles in a dispersion medium (e.g., distilled water), the average particle diameter (D₅₀) of the secondary particle is a particle diameter at a cumulative volume of 50% in a particle size distribution curve which is obtained by measuring a difference in diffraction patterns due to a particle size when the dispersion medium is introduced into a laser diffraction particle size measurement instrument (Microtrac S3500) and the particles pass through a laser beam.

### Positive Electrode Active Material

A positive electrode active material according to the present invention may include a lithium transition metal oxide which is in a form of a secondary particle, in which a plurality of primary particles are aggregated, and has an amount of nickel among metallic elements excluding lithium of 80 atm% or more; a first coating layer which is formed on a surface of the secondary particle of the lithium transition metal oxide and surfaces of a portion or all of the plurality of primary particles, contains nickel and manganese, and has a layered structure; and a second coating layer which is formed on an outer surface of the first coating layer and contains boron.

The positive electrode active material according to the present invention may include a lithium transition metal oxide which is in the form of a secondary particle, in which a plurality of primary particles are aggregated, and has an amount of nickel among metallic elements excluding lithium of 80 atm% or more.

Specifically, the lithium transition metal oxide included in the positive electrode active material of the present invention may have a composition represented by Formula 1 below.

[Formula 1] LiₐNi_{b}Co_{c}M¹_{d}M²ₑO₂

In Formula 1, M¹ may be at least one selected from manganese (Mn) and aluminum (Al), and may be preferably Mn or a combination of Mn and Al.

In Formula 1, M² may be at least one selected from the group consisting of zirconium (Zr), boron (B), tungsten (W), molybdenum (Mo), chromium (Cr), niobium (Nb), magnesium (Mg), hafnium (Hf), tantalum (Ta), lanthanum (La), titanium (Ti), strontium (Sr), barium (Ba), cerium (Ce), fluorine (F), phosphorus (P), sulfur (S), and yttrium (Y).
a represents a molar ratio of lithium in the lithium transition metal oxide, wherein a may satisfy 0.9≤a≤1.3, 0.9≤a≤1.2, or 1.0≤a≤1.1.
b represents a molar ratio of nickel among metallic elements excluding lithium in the lithium transition metal oxide, wherein b may satisfy 0.80≤b<1.0, 0.80≤b≤0.98, or 0.80≤b≤0.95. In a case in which the amount of the nickel satisfies the above range, high capacity characteristics may be achieved.
c represents a molar ratio of cobalt among the metallic elements excluding lithium in the lithium transition metal oxide, wherein c may satisfy 0<c≤0.2, 0<c≤0.15, or 0.01≤c≤0.10.
d represents a molar ratio of M¹ among the metallic elements excluding lithium in the lithium transition metal oxide, wherein d may satisfy 0<d≤0.2, 0<d≤0.15, or 0.01≤d≤0.10.
e represents a molar ratio of M² among the metallic elements excluding lithium in the lithium transition metal oxide, wherein e may satisfy 0≤e≤0.1 or 0≤e≤0.05.

The lithium transition metal oxide included in the positive electrode active material of the present invention may have an average particle diameter of the primary particle of 0.1 um to 0.5 um, for example, 0.1 um to 0.3 um. In a case in which the average particle diameter of the primary particle satisfies the above range, sufficient capacity of the secondary battery may be secured.

The lithium transition metal oxide included in the positive electrode active material according to the present invention may have an average particle diameter (D₅₀) of the secondary particle of 8 um to 15 µm, for example, 9 um to 12 um. In a case in which the average particle diameter (D₅₀) of the secondary particle is less than the above range, there is a problem in that a gas reaction due to a side reaction with an electrolyte solution in the prepared secondary battery is excessively increased, and, in a case in which the average particle diameter (D₅₀) of the secondary particle is greater than the above range, there is a problem in that an electrode collector is torn when an electrode is coated with the positive electrode active material.

The positive electrode active material according to the present invention may include a first coating layer which is formed on a surface of the secondary particle of the lithium transition metal oxide and surfaces of a portion or all of the plurality of primary particles, contains nickel and manganese, and has a layered structure.

Since the first coating layer has a layered structure, it has the same crystal structure as the lithium transition metal oxide, and thus, it is considered that the first coating layer may improve stability and initial charge and discharge characteristics of the positive electrode active material in comparison to a coating layer having a spinel structure.

The first coating layer may be formed on the surface of the lithium transition metal oxide secondary particle and the surfaces of the portion or all of the plurality of primary particles in the secondary particle. The first coating layer may be formed to fill all gaps between the primary particles by being connected to each other. Preferably, the first coating layer is formed on the surfaces of all of the plurality of primary particles, and may be formed to fill all the gaps between the primary particles.

An average thickness of the first coating layer may be in a range of 10 nm to 200 nm, for example, 30 nm to 100 nm. In a case in which the average thickness of the first coating layer satisfies the above range, stability and initial capacity may be improved by suppressing crack generation at an interface between the primary particles.

The first coating layer according to the present invention may contain manganese and nickel. The first coating layer according to the present invention may have a layered structure by including the manganese and nickel, and, as a result, it is considered that the first coating layer may improve the stability and initial charge and discharge characteristics of the positive electrode active material in comparison to the coating layer having a spinel structure which contains only manganese.

The first coating layer according to the present invention may include a lithium-nickel manganese oxide because lithium in lithium transition metal oxide is diffused during a heat treatment.

Specifically, the first coating layer may have a composition represented by Formula 2 below.

[Formula 2] LiₓNi_{y}Mn_{z}O₂

x represents a molar ratio of lithium in the first coating layer, wherein x may satisfy 0.8≤x≤1.2, for example, 1.00≤x≤1.02.
y represents a molar ratio of nickel in the first coating layer, wherein y may satisfy 0.1≤y≤0.9, for example, 0.2≤y≤0.8.
z represents a molar ratio of manganese in the first coating layer, wherein z may satisfy 0.1≤z≤0.9, for example, 0.2≤z≤0.8.

Specifically, a molar ratio of nickel : manganese, which are included in the first coating layer, may be in a range of 1:9 to 9:1, preferably 5:5 to 9:1, and more preferably 6:4 to 8:2. In a case in which the molar ratio of nickel : manganese, which are included in the first coating layer, is less than 1:9, since the first coating layer has a spinel structure, sufficient initial charge and discharge capacity may not be obtained. In a case in which the molar ratio of nickel : manganese, which are included in the first coating layer, is greater than 9:1, since the amount of the nickel is large to reduce capacity retention, cycle characteristics may be undesirable.

The first coating layer according to the present invention may be included in an amount of 1 part by weight to 5 parts by weight, preferably 1 part by weight to 3 parts by weight, and more preferably 1.5 parts by weight to 2.5 parts by weight based on 100 parts by weight of the lithium transition metal oxide. In a case in which the amount of the first coating layer satisfies the above range, the stability and initial capacity may be improved by suppressing the crack generation at the interface between the primary particles.

The positive electrode active material according to the present invention may include a second coating layer which is formed on an outer surface of the first coating layer and contains boron. The first coating layer having a layered structure may improve a problem of degradation of the initial charge and discharge characteristics, which is a disadvantage of a coating having a spinel structure, but a phenomenon appears in which cycle characteristics are degraded. Thus, the cycle characteristics may be improved by forming the second coating layer containing boron on the outer surface of the first coating layer having a layered structure.

Specifically, in this case, the second coating layer according to the present invention may contain boron in a form of an amorphous boron compound such as lithium boron oxide and boron oxide. For example, the second coating layer may include LiBO₂, Li₂B₄O₇, LiB₃O₅, or B₂O₃. The amorphous boron compound may be continuously coated in the form of a film, an island, or a mixture thereof, unlike a crystalline compound which may only be discontinuously coated in the form of a particle.

The second coating layer may be included in an amount of 0.01 part by weight to 1 part by weight, preferably 0.05 part by weight to 0.5 part by weight, and more preferably 0.1 part by weight to 0.3 part by weight based on 100 parts by weight of the lithium transition metal oxide. In a case in which the amount of the second coating layer satisfies the above range, the cycle characteristics may be improved.

In the positive electrode active material according to the present invention, an amount of a lithium by-product remaining on a surface thereof may be 1 wt% or less, for example, 0.6 wt% or less based on a total weight of the positive electrode active material.

### Method of Preparing Positive Electrode Active Material

The method of preparing a positive electrode active material according to the present invention may include the steps of: preparing a lithium transition metal oxide which is in a form of a secondary particle, in which a plurality of primary particles are aggregated, and has an amount of nickel among metallic elements excluding lithium of 80 atm% or more; mixing the lithium transition metal oxide with a solution containing a nickel raw material and a manganese raw material and performing a first heat treatment to form a first coating layer containing nickel and manganese and having a layered structure on a surface of the secondary particle of the lithium transition metal oxide and surfaces of a portion or all of the plurality of primary particles; and mixing the lithium transition metal oxide having the first coating layer formed thereon with a boron raw material and performing a second heat treatment to form a second coating layer containing boron on an outer surface of the first coating layer.

First, a lithium transition metal oxide, which is in the form of a secondary particle, in which a plurality of primary particles are aggregated, and has an amount of nickel among metallic elements excluding lithium of 80 atm% or more, may be prepared.

The lithium transition metal oxide may be used by purchasing a commercially available product, or may be prepared by using a method of preparing a lithium transition metal oxide which is known in the art. For example, the lithium transition metal oxide may be prepared by mixing a lithium raw material with a positive electrode active material precursor and then sintering the mixture.

The positive electrode active material precursor, for example, may be represented by the following [Formula A] or [Formula B].

[Formula A] [NiₚCo_{q}M¹ᵣM²ₛ](OH)₂

[Formula B] [NiₚCo_{q}M¹ᵣM²ₛ]O·OH

In Formula A and Formula B, M¹ may be at least one selected from Mn and Al, and may be preferably Mn or a combination of Mn and Al.

In Formula A and Formula B, M² may be at least one selected from the group consisting of Zr, B, W, Mo, Cr, Nb, Mg, Hf, Ta, La, Ti, Sr, Ba, Ce, F, P, S, and Y.
p represents a molar ratio of nickel among metallic elements in the precursor, wherein p may satisfy 0.80≤p<1.0, 0.80≤p≤0.98, or 0.80≤p≤0.95.
q represents a molar ratio of cobalt among the metallic elements in the precursor, wherein q may satisfy 0<q≤0.2, 0<q≤0.15, or 0.01≤q≤0.10.
r represents a molar ratio of an M¹ element among the metallic elements in the precursor, wherein r may satisfy 0<r≤0.2, 0<r≤0.15, or 0.01≤r≤0.1.
s represents a molar ratio of an M² element among the metallic elements in the precursor, wherein s may satisfy 0≤s<0.1 or 0≤s≤0.05.

The lithium raw material, for example, may be at least one selected from the group consisting of lithium carbonate (Li₂CO₃), lithium hydroxide (LiOH·H₂O), lithium hydroxide anhydride (LiOH), LiNO₃, CH₃COOLi, and Li₂(COO)₂, and may be preferably lithium carbonate (Li₂CO₃), lithium hydroxide (LiOH·H₂O), or a combination thereof.

The positive electrode active material precursor and the lithium raw material may be mixed so that a molar ratio of lithium (Li) : transition metal is in a range of 1 : 1 to 1.3 : 1, for example, 1 : 1 to 1.1 : 1 during the preparation of the positive electrode active material. When the mixing ratio of the positive electrode active material precursor to the lithium raw material satisfies the above range, a crystal structure of the positive electrode active material is smoothly developed, and a positive electrode active material having excellent physical properties may be prepared. In a case in which an amount of the lithium raw material is excessively small, the crystal structure does not develop properly, and, in a case in which the amount of the lithium raw material is excessively large, unreacted Li remains as a by-product, and, as a result, a decrease in capacity and gas generation may occur.

The sintering may be performed at a temperature of 700°C to 1,000°C, preferably 700°C to 900°C, and more preferably 700°C to 850°C. In a case in which the sintering temperature is less than 700°C, since the raw material remains in the particle due to an insufficient reaction, high-temperature stability of the battery may be reduced and bulk density and crystallinity may be reduced to reduce structural stability. In a case in which the sintering temperature is greater than 1,000°C, non-uniform growth of the particle may occur, and the decrease in capacity may occur because it is difficult to disintegrate the particles.

The sintering may be performed for 5 hours to 24 hours, for example, 10 hours to 24 hours. In a case in which the sintering time is less than 5 hours, since reaction time is excessively short, it may be difficult to obtain a high crystalline positive electrode active material, and, in a case in which the sintering time is greater than 24 hours, a size of the particle may be excessively increased, and production efficiency may be reduced.

In a case in which the positive electrode active material is prepared by the preparation method according to the present invention, since the lithium by-product on the surface of the lithium transition metal oxide is consumed during the formation of the first coating layer and the second coating layer, a residual amount of the lithium by-product of the finally prepared positive electrode active material is small even if the lithium transition metal oxide, which has not been subjected to a washing process, is used. Specifically, the amount of the lithium by-product remaining on the surface of the positive electrode active material according to the present invention may be 1 wt% or less, for example, 0.6 wt% or less based on the total weight of the positive electrode active material. Thus, the preparing of the lithium transition metal oxide of the present invention may not include a washing process. As described above, according to the method of preparing a high-nickel positive electrode active material according to the present invention, since the washing process may be omitted, problems caused by the washing process may be solved and equipment and processing costs may be reduced.

Next, the prepared lithium transition metal oxide may be mixed with a solution containing a nickel raw material and a manganese raw material and then subjected to a first heat treatment to form a first coating layer containing nickel and manganese and having a layered structure on a surface of the secondary particle of the lithium transition metal oxide and surfaces of a portion or all of the plurality of primary particles.

Specifically, the forming of the first coating layer, for example, may be performed by a method in which, after the lithium transition metal oxide and the solution containing the nickel raw material and the manganese raw material are mixed, stirred, and separated by filtration, the first heat treatment is performed in an oxygen atmosphere.

In the forming of the first coating layer, it is considered that the solution containing the nickel raw material and the manganese raw material penetrates the interface between the primary particles in the lithium transition metal oxide to be able to coat the first coating layer on the primary particle interface as well as the secondary particle. As a result, the positive electrode active material according to the present invention may improve high-temperature cycle characteristics by suppressing crack generation between the primary particles.

The nickel raw material and the manganese raw material may be mixed such that an amount of each of the nickel raw material and the manganese raw material is in a range of 0.5 part by weight to 10 parts by weight, preferably 1 part by weight to 8 parts by weight, and more preferably 2 parts by weight to 8 parts by weight based on 100 parts by weight of the lithium transition metal oxide. The amounts of the nickel raw material and the manganese raw material are amounts which are adjusted so that the formed first coating layer is included in an amount of 1 part by weight to 5 parts by weight based on 100 parts by weight of the lithium transition metal oxide in the positive electrode active material. In a case in which the amounts of the nickel raw material and the manganese raw material satisfy the above range, the stability and initial capacity may be improved by suppressing the crack generation at the interface between the primary particles.

As the nickel raw material, for example, nickel acetate, nickel sulfate, nickel chloride, or nickel nitrate may be used.

As the manganese raw material, for example, manganese acetate, manganese sulfate, manganese chloride, or manganese nitrate may be used.

The solution containing the nickel raw material and the manganese raw material may be prepared by dissolving the nickel raw material and the manganese raw material in a solvent such as water and ethanol.

If the lithium transition metal oxide is added to the solution containing the nickel raw material and the manganese raw material, mixed, and then stirred, nickel and manganese contained in the solution are attached to the surface of the lithium transition metal oxide.

After separating the lithium transition metal oxide by filtration, a first heat treatment is performed to obtain lithium transition metal oxide powder having the first coating layer formed thereon.

In this case, the filtration may be performed by a method of vacuum decompression after putting a filter paper in a filtration flask, and the drying may be performed at 50°C to 200°C, for example, 80°C to 150°C for 2 hours to 20 hours, for example, 5 hours to 15 hours.

The first heat treatment is to form the first coating layer by fixing nickel and manganese on the surface of the lithium transition metal oxide, wherein it may be performed at a temperature of 650°C to 850°C, for example, at a temperature of 650°C to 750°C. In a case in which the heat treatment temperature is less than 650°C, a first coating layer having a spinel structure rather than a layered structure is obtained. In a case in which the heat treatment temperature is greater than 850°C, since particle strength is excessively increased due to necking between the particles, a process of additionally fine grinding particle aggregates must be added during a subsequent process or capacity during charge and discharge may be reduced when a secondary battery is prepared.

The first heat treatment may be performed for 1 hour to 10 hours, for example, 3 hours to 7 hours. In a case in which the heat treatment time is within the above range, an appropriate first coating layer may be formed and the production efficiency may be improved.

If the first coating layer is formed through the above-described process, the lithium transition metal oxide having the first coating layer formed thereon may be mixed with a boron raw material, and a second heat treatment is performed to form a second coating layer containing boron on an outer surface of the first coating layer.

Specifically, the forming of the second coating layer may be performed by a method of dry mixing a boron raw material, such as boric acid, with the lithium transition metal oxide having the first coating layer formed thereon and then performing a second heat treatment.

In a case in which the second coating layer is formed on the first coating layer, a cycle characteristics degradation phenomenon due to the formation of the first coating layer may not only be improved, but movement barrier energy of lithium ions may also be reduced by boron as a component of the second coating layer. Also, since the second coating layer formed may suppress a direct reaction between the electrolyte solution and the lithium transition metal oxide, the stability of the positive electrode active material and life characteristics of the secondary battery using the positive electrode active material may be improved.

The boron raw material may be powder including amorphous compound particles containing boron. For example, the boron raw material may include boric acid or B₂O₃.

The boron raw material may be mixed so that an amount of the boron raw material is in a range of 0.0001 part by weight to 10 parts by weight, preferably 0.001 part by weight to 5 parts by weight, and more preferably 0.01 part by weight to 1 part by weight based on 100 parts by weight of the lithium transition metal oxide. The amount of the boron raw material is an amount which is adjusted so that the formed second coating layer is included in an amount of 0.01 part by weight to 1 part by weight based on 100 parts by weight of lithium transition metal oxide in the positive electrode active material. In a case in which the amount of the boron raw material satisfies the above range, the stability of the positive electrode active material and the life characteristics of the secondary battery using the positive electrode active material may be improved by suppressing the direct reaction between the electrolyte solution and the lithium transition metal oxide.

The second heat treatment is to form the second coating layer by fixing the boron-containing compound attached to the outer surface of the first coating layer of the lithium transition metal oxide having the first coating layer formed thereon, wherein it may be performed at a temperature of 150°C to 500°C, for example, at a temperature of 300°C to 400°C. In a case in which the heat treatment temperature is less than 150°C, since the heat treatment temperature is below a melting point of the boron-containing compound, coating is not possible. In a case in which the heat treatment temperature is greater than 500°C, since a boron layer is crystallized, coating may be poor.

The second heat treatment may be performed for 1 hour to 10 hours, for example, 3 hours to 7 hours. In a case in which the heat treatment time is within the above range, an appropriate second coating layer may be formed and the production efficiency may be improved.

It is desirable that the second heat treatment is performed in an oxygen atmosphere.

A second coating layer containing boron is formed on the outer surface of the first coating layer by the second heat treatment. In this case, the second coating layer may contain boron in the form of an amorphous boron compound such as lithium boron oxide or boron oxide. For example, the second coating layer may include LiBO₂, Li₂B₄O₇, LiB₃O₅, or B₂O₃.

### Positive Electrode

A positive electrode according to the present invention includes the above-described positive electrode active material of the present invention. Specifically, the positive electrode includes a positive electrode collector and a positive electrode active material layer formed on the positive electrode collector, wherein the positive electrode active material layer includes a positive electrode active material according to the present invention. Since the positive electrode active material has been described above, detailed descriptions thereof will be omitted, and the remaining configurations will be only described in detail below.

The positive electrode collector may include a metal having high conductivity, and is not particularly limited as long as it has no reactivity in a voltage range of the battery and the positive electrode active material layer is easily adhered thereto. As the positive electrode collector, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 um to 500 µm, and microscopic irregularities may be formed on the surface of the collector to improve the adhesion of the positive electrode active material. The positive electrode collector, for example, may be used in various shapes such as that of a film, a sheet, a foil, a net, a porous body, a foam body, a non-woven fabric body, and the like.

The positive electrode active material layer may optionally include a conductive agent and a binder in addition to the positive electrode active material, if necessary.

In this case, the positive electrode active material may be included in an amount of 80 wt% to 99 wt%, for example, 85 wt% to 98.5 wt% based on a total weight of the positive electrode active material layer. When the positive electrode active material is included in an amount within the above range, excellent capacity characteristics may be obtained.

The conductive agent is used to provide conductivity to the electrode, wherein any conductive agent may be used without particular limitation as long as it has suitable electron conductivity without causing adverse chemical changes in the battery. Specific examples of the conductive agent may be graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive tubes such as carbon nanotubes; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be included in an amount of 0.1 wt% to 15 wt% based on the total weight of the positive electrode active material layer.

The binder improves the adhesion between positive electrode active material particles and the adhesion between the positive electrode active material and the current collector. Specific examples of the binder may be polyvinylidene fluoride (PVDF), polyvinylidene fluoride-hexafluoropropylene copolymer (PVDF-co-HFP), polyvinyl alcohol, polyacrylonitrile, polymethylmethacrylate, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, a styrene-butadiene rubber (SBR), a fluorine rubber, poly acrylic acid, and a polymer having hydrogen thereof substituted with lithium (Li), sodium (Na), or calcium (Ca), or various copolymers thereof, and any one thereof or a mixture of two or more thereof may be used. The binder may be included in an amount of 0.1 wt% to 15 wt% based on the total weight of the positive electrode active material layer.

The positive electrode may be prepared according to a typical method of preparing a positive electrode except that the above-described positive electrode active material is used. Specifically, a composition for forming a positive electrode active material layer, which is prepared by dissolving or dispersing the positive electrode active material as well as optionally the binder and the conductive agent in a solvent, is coated on the positive electrode collector, and the positive electrode may then be prepared by drying and rolling the coated positive electrode collector, or the positive electrode may be prepared by casting the composition for forming a positive electrode active material layer on a separate support and then laminating a film separated from the support on the positive electrode collector.

The solvent may be a solvent normally used in the art, and may include dimethyl sulfoxide (DMSO), isopropyl alcohol, N-methylpyrrolidone (NMP), dimethyl formamide (DMF), acetone, or water, and any one thereof or a mixture of two or more thereof may be used. An amount of the solvent used may be sufficient if the solvent may dissolve or disperse the positive electrode active material, the conductive agent, the binder, and the dispersant in consideration of a coating thickness of a slurry and manufacturing yield, and may allow to have a viscosity that may provide excellent thickness uniformity during the subsequent coating for the preparation of the positive electrode.

### Electrochemical Device

Next, an electrochemical device according to the present invention will be described. The electrochemical device according to the present invention includes the above-described positive electrode of the present invention, wherein the electrochemical device may specifically be a battery or a capacitor, and may more specifically be a lithium secondary battery.

The lithium secondary battery specifically includes a positive electrode, a negative electrode disposed to face the positive electrode, a separator disposed between the positive electrode and the negative electrode, and an electrolyte, wherein, since the positive electrode is the same as described above, detailed descriptions thereof will be omitted, and the remaining configurations will be only described in detail below.

Also, the lithium secondary battery may further optionally include a battery container accommodating an electrode assembly of the positive electrode, the negative electrode, and the separator, and a sealing member sealing the battery container.

In the lithium secondary battery, the negative electrode includes a negative electrode collector and a negative electrode active material layer disposed on the negative electrode collector.

The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 um to 500 µm, and, similar to the positive electrode collector, microscopic irregularities may be formed on the surface of the collector to improve the adhesion of a negative electrode active material. The negative electrode collector, for example, may be used in various shapes such as that of a film, a sheet, a foil, a net, a porous body, a foam body, a non-woven fabric body, and the like.

The negative electrode active material layer optionally includes a binder and a conductive agent in addition to the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as SiO_{β}(0<β<2), SnO₂, vanadium oxide, and lithium vanadium oxide; or a composite including the metallic compound and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

The negative electrode active material may be included in an amount of 80 wt% to 99 wt% based on a total weight of the negative electrode active material layer.

The binder is a component that assists in the binding between the conductive agent, the active material, and the current collector, wherein the binder is typically added in an amount of 0.1 wt% to 10 wt% based on the total weight of the negative electrode active material layer. Examples of the binder may be polyvinylidene fluoride (PVDF), polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated-EPDM, a styrene-butadiene rubber, a nitrile-butadiene rubber, a fluorine rubber, and various copolymers thereof.

The conductive agent is a component for further improving conductivity of the negative electrode active material, wherein the conductive agent may be added in an amount of 10 wt% or less, for example, 5 wt% or less based on the total weight of the negative electrode active material layer. The conductive agent is not particularly limited as long as it has conductivity without causing adverse chemical changes in the battery, and, for example, a conductive material such as: graphite such as natural graphite or artificial graphite; carbon black such as acetylene black, Ketjen black, channel black, furnace black, lamp black, and thermal black; conductive fibers such as carbon fibers or metal fibers; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives may be used.

The negative electrode may be prepared by coating a composition for forming a negative electrode active material layer, which is prepared by dissolving or dispersing optionally the binder and the conductive agent as well as the negative electrode active material in a solvent, on the negative electrode collector and drying the coated negative electrode collector, or may be prepared by casting the composition for forming a negative electrode active material layer on a separate support and then laminating a film separated from the support on the negative electrode collector.

In the lithium secondary battery, the separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

Also, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent may be used, and, for example, a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) may be used.

The lithium salt may be used without particular limitation as long as it is a compound capable of providing lithium ions used in the lithium secondary battery. Specifically, an anion of the lithium salt may be at least one selected from the group consisting of F-, Cl⁻, Br⁻, I-, NO₃⁻, N(CN)₂⁻, BF₄⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN-, and (CF₃CF₂SO₂)₂N⁻, and LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂ may be used as the lithium salt. The lithium salt may be used in a concentration range of 0.1 M to 2.0 M. If the concentration of the lithium salt is included within the above range, since the electrolyte may have appropriate conductivity and viscosity, excellent performance of the electrolyte may be obtained and lithium ions may effectively move.

In order to improve lifetime characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexaphosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the above electrolyte components. In this case, the additive may be included in an amount of 0.1 wt% to 5 wt% based on a total weight of the electrolyte.

As described above, since the lithium secondary battery including the positive electrode active material according to the present invention stably exhibits excellent discharge capacity, output characteristics, and life characteristics, the lithium secondary battery is suitable for portable devices, such as mobile phones, notebook computers, and digital cameras, and electric cars such as hybrid electric vehicles (HEVs).

Thus, according to another embodiment of the present invention, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

A shape of the lithium secondary battery of the present invention is not particularly limited, but a cylindrical type using a can, a prismatic type, a pouch type, or a coin type may be used.

The lithium secondary battery according to the present invention may not only be used in a battery cell that is used as a power source of a small device, but may also be used as a unit cell in a medium and large sized battery module including a plurality of battery cells.

Examples of the medium and large sized device may be an electric vehicle, a hybrid electric vehicle, a plug-in hybrid electric vehicle, and a power storage system, but the medium and large sized device is not limited thereto.

Hereinafter, examples of the present invention will be described in detail in such a manner that it may easily be carried out by a person with ordinary skill in the art to which the present invention pertains. The invention may, however, be embodied in many different forms and should not be construed as being limited to the examples set forth herein.

### Example 1

A lithium transition metal oxide having a composition of LiNi_{0.86}Co_{0.05}Mn_{0.07}Al_{0.02}O₂ and being in the form of a secondary particle in which a plurality of primary particles were aggregated was prepared.

After 50 g of the lithium transition metal oxide was added to a solution, in which 3.96 g of nickel nitrate and 1.06 g of manganese nitrate were dissolved in 15.0 g of ultrapure water (DI water), (molar ratio of nickel : manganese in the solution = 8:2) and mixed at 100°C for 1 hour, the mixture was dried in an oven at 130°C. Subsequently, the dried resultant product was subjected to a first heat treatment at 750°C in an oxygen atmosphere to form a first coating layer.

After mixing 30 g of the resultant product having the first coating layer formed thereon and 0.18 g of boric acid powder, a second heat treatment was performed at a temperature of 300°C for 5 hours in an air atmosphere to form a second coating layer, and a sintered body was then ground and classified to obtain a positive electrode active material for a lithium secondary battery.

### Example 2

A positive electrode active material was prepared in the same manner as in Example 1 except that a first coating layer was formed by adding the lithium transition metal oxide to a solution in which 2.97 g of nickel nitrate and 2.12 g of manganese nitrate were dissolved in 15.0 g of ultrapure water (DI water) (molar ratio of nickel : manganese in the solution = 6:4).

### Example 3

A positive electrode active material was prepared in the same manner as in Example 1 except that a first coating layer was formed by adding the lithium transition metal oxide to a solution in which 1.98 g of nickel nitrate and 3.18 g of manganese nitrate were dissolved in 15.0 g of ultrapure water (DI water) (molar ratio of nickel : manganese in the solution = 4:6).

### Example 4

A positive electrode active material was prepared in the same manner as in Example 1 except that a first coating layer was formed by adding the lithium transition metal oxide to a solution in which 0.99 g of nickel nitrate and 4.24 g of manganese nitrate were dissolved in 15.0 g of ultrapure water (DI water) (molar ratio of nickel : manganese in the solution = 2:8).

### Comparative Example 1

A positive electrode active material was prepared in the same manner as in Example 1 except that a first coating layer was formed by adding the lithium transition metal oxide to a solution in which only 5.29 g of nickel nitrate was dissolved in 15.0 g of ultrapure water (DI water).

### <Structural Analysis of the First Coating Layer>

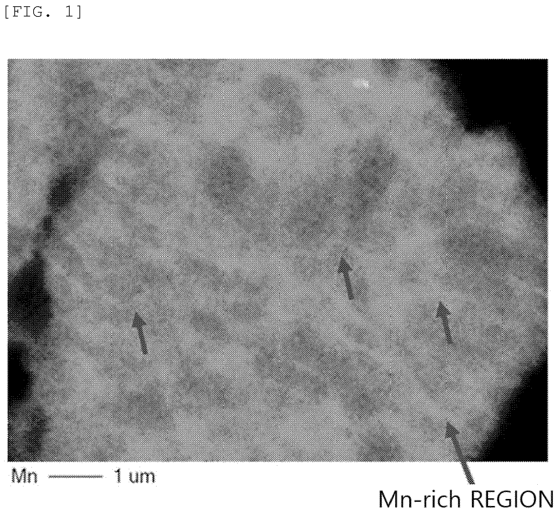

FIG. 1 is an electron probe micro-analysis (EPMA) result of a particle after forming the first coating layer (before forming the second coating layer) according to Example 1 on the lithium transition metal oxide in the form of a secondary particle in which a plurality of primary particles were aggregated. In FIG. 1, a manganese-rich (Mn-rich) region was observed at an interface of the primary particles. Accordingly, it may be confirmed that the raw materials added to form the first coating layer were coated at the interface of the primary particles to form the first coating layer.

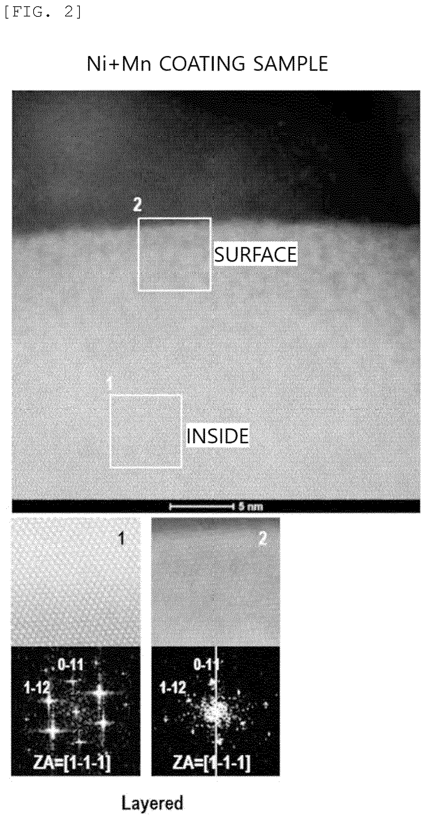

FIG. 2 is a transmission electron microscope (TEM) image of the particle after forming the first coating layer (before forming the second coating layer) according to Example 1. An image indicated by 1 of FIG. 2 is an image of the lithium transition metal oxide, and an image indicated by 2 of FIG. 2 is an image of the first coating layer. A fast Fourier transform (FFT) pattern observed in a layered structure was observed in both the images indicated by 1 and 2 of FIG. 2, wherein it may be confirmed that both the lithium transition metal oxide and the first coating layer of Example 1 had a layered structure.

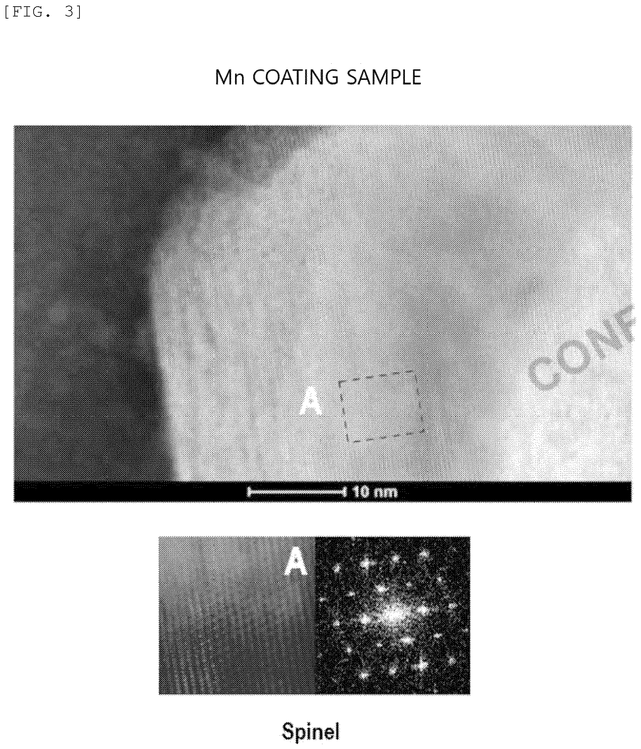

FIG. 3 is a transmission electron microscope (TEM) image of a particle after forming the first coating layer (before forming the second coating layer) according to Comparative Example 1 on the lithium transition metal oxide as the secondary particle. A of FIG. 3 is an image of the first coating layer. An FFT pattern of a spinel structure was observed in the image indicated by A of FIG. 3. That is, it may be confirmed that the first coating layer of Comparative

Example 1 had a spinel structure.

### <Analysis of Whether or Not the Second Coating Layer Contains Boron>

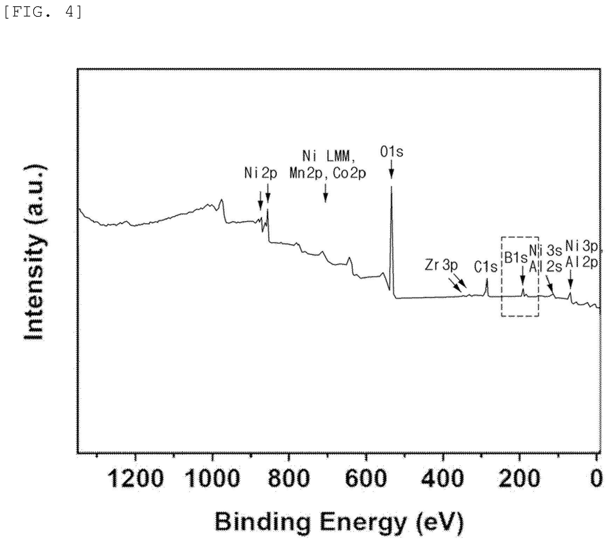

FIG. 4 is an X-ray photoelectron spectroscopy (XPS) result of the positive electrode active material on which the first coating layer and the second coating layer were formed according to Example 1. As illustrated in a graph of FIG. 4, it may be confirmed that boron was contained in the second coating layer which was located on an outermost surface of the positive electrode active material.

### <Measurement of Particle Diameters of the Primary Particle and the Secondary Particle>

An average particle diameter of the primary particles of the lithium transition metal oxide used in Examples 1 to 4 and Comparative Example 1 was measured using a scanning electron microscope (SEM), and an average particle diameter (D₅₀) of the secondary particles of the lithium transition metal oxide used in Examples 1 to 4 and Comparative Example 1 was measured using a laser diffraction method.

As a result of the measurements, the average particle diameter of the primary particles was 0.15 um, and the average particle diameter (D₅₀) of the secondary particles was 10 um.

### <Measurement of Amount of the Second Coating Layer>

ICP-MS (Inductively Coupled Plasma-Mass Spectrometer) analysis was performed to measure an amount of boron contained in the second coating layer of Example 1.

As a result of inverse calculation of an amount of lithium boron oxide or boron oxide contained in the second coating layer from the amount of the boron which had been obtained as a result of the measurement, it was calculated that an amount of the second coating layer was 0.1 wt% based on 100 parts by weight of lithium transition metal oxide in Example 1.

### <Measurement of Average Thickness of the First Coating Layer>

A thickness of the first coating layer of Example 1 was measured using a TEM image. Specifically, arbitrary three locations in the positive electrode active material of Example 1 were observed with a TEM to obtain thicknesses of the first coating layer, and an average value thereof was calculated.

As a result of the measurement, the average thickness of the first coating layer in Example 1 was measured to be 80 nm.

### Experimental Example 1 - Measurement of Amount of Lithium By-product Remaining on the Surface of the Positive Electrode Active Material

An amount of lithium by-product remaining on the surface of each of the positive electrode active materials prepared in Examples 1 to 4 was measured.

Specifically, 5 g of each of the positive electrode active materials prepared by Examples 1 to 4 and Comparative Example 1 was stirred in 100 mL of ultrapure water for 5 minutes and filtered, and the filtered solution was then titrated with 0.1 N HCl. After obtaining a titration curve using a Metrohm pH meter, equivalence points of LiOH and Li₂CO₃ were obtained from the titration curve to calculate the amount of the lithium by-product remaining on the surface of the positive electrode active material. The results thereof are presented in Table 1 below.

For comparison, an amount of lithium by-product remaining on the surface of the lithium transition metal oxide before forming the first coating layer in Examples 1 to 4 is presented in Table 1 together.

**[Table 1]**

| | Residual amount of Li₂CO₃ (wt%) | Residual amount of LiOH (wt%) | Total amount of lithium by-product (wt%) |
|---|---|---|---|
| Example 1 | 0.09 | 0.43 | 0.52 |
| Example 2 | 0.09 | 0.39 | 0.48 |
| Example 3 | 0.09 | 0.34 | 0.43 |
| Example 4 | 0.09 | 0.33 | 0.42 |
| Lithium transition metal oxide | 1.23 | 0.60 | 1.83 |

Referring to Table 1, it may be confirmed that residual lithium was sufficiently reduced even though the positive electrode active materials of Examples 1 to 4 were not subjected to a washing process.

### Experimental Example 2 - Initial Discharge Capacity Evaluation

92.5 wt% of each of the positive electrode active materials prepared in Examples 1 to 4 and Comparative Example 1, 3.5 wt% of carbon black as a conductive agent, and 4 wt% of polyvinylidene fluoride, as a binder, were mixed in an N-methylpyrrolidone solvent to prepare a positive electrode slurry. One surface of an aluminum current collector was coated with the positive electrode slurry, dried at 130°C, and then roll-pressed to prepare a positive electrode.

Li metal was used as a counter electrode of the positive electrode, and an electrode assembly was prepared by disposing a porous polyethylene (PE) separator between the positive electrode and negative electrode. The electrode assembly was disposed in a case and an electrolyte solution, in which ethylene carbonate(EC)/ethyl methyl carbonate(EMC)/diethyl carbonate(DEC) were mixed in a volume ratio of 3:4:3, was injected to prepare each coin-type half-cell.

Each of the batteries prepared as described above was charged at a constant current of 0.1 C to 4.25 V at 25°C, and then discharged at a constant current of 0.1 C to 3.00 V to measure initial discharge capacity. The results thereof are presented in Table 2 below.

**[Table 2]**

| | Initial charge capacity (mAh/g) | Initial discharge capacity (mAh/g) |
|---|---|---|
| Example 1 | 225.35 | 198.61 |
| Example 2 | 223.95 | 193.99 |
| Example 3 | 222.48 | 188.69 |
| Example 4 | 218.30 | 184.61 |
| Comparative Example 1 | 217.46 | 184.99 |

Referring to Table 2, it may be confirmed that the secondary batteries using the positive electrode active materials of Examples 1 to 4 had higher initial discharge capacities than the secondary battery using the positive electrode active material of Comparative Example 1.

### Experimental Example 3 - Cycle Characteristics Evaluation

Charging of each of the batteries prepared in Experimental Example 2 at a constant current of 0.33 C to 4.25 V at 45°C and discharging of each battery at a constant current of 0.33 C to 3.00 V were set as one cycle, and, after 30 cycles of charging and discharging were performed, a capacity retention relative to initial capacity after 30 cycles was measured. The results thereof are presented in Table 3 below.

**[Table 3]**

| | Capacity retention (%) |
|---|---|
| Example 1 | 97.07 |
| Example 2 | 95.15 |
| Example 3 | 94.78 |
| Example 4 | 92.88 |
| Comparative Example 1 | 91.16 |

Referring to Table 3, it may be confirmed that the secondary batteries using the positive electrode active materials of Examples 1 to 4 had better high-temperature cycle characteristics than the secondary battery using the positive electrode active material of Comparative Example 1.

## Claims

1. A positive electrode active material comprising:
a lithium transition metal oxide which is in a form of a secondary particle, in which a plurality of primary particles are aggregated, and has an amount of nickel among metallic elements excluding lithium of 80 atm% or more;
a first coating layer which is formed on a surface of the secondary particle of the lithium transition metal oxide and surfaces of a portion or all of the plurality of primary particles, contains nickel and manganese, and has a layered structure; and
a second coating layer which is formed on an outer surface of the first coating layer and contains boron.

2. The positive electrode active material of claim 1, wherein the lithium transition metal oxide has a composition represented by Formula 1:
[Formula 1] LiₐNi_{b}Co_{c}M¹_{d}M²ₑO₂
wherein, in Formula 1,
M¹ is at least one selected from manganese (Mn) and aluminum (Al),
M² is at least one selected from the group consisting of zirconium (Zr), boron (B), tungsten (W), molybdenum (Mo), chromium (Cr), niobium (Nb), magnesium (Mg), hafnium (Hf), tantalum (Ta), lanthanum (La), titanium (Ti), strontium (Sr), barium (Ba), cerium (Ce), fluorine (F), phosphorus (P), sulfur (S), and yttrium (Y), and
0.9≤a≤1.3, 0.80≤b<1.0, 0<c≤0.2, 0<d≤0.2, and 0≤e≤0.1.

3. The positive electrode active material of claim 1, wherein the primary particle has an average particle diameter of 0.1 um to 0.5 um.

4. The positive electrode active material of claim 1, wherein the secondary particle has an average particle diameter (D₅₀) of 8 um to 15 um.

5. The positive electrode active material of claim 1, wherein the first coating layer has an average thickness of 10 nm to 200 nm.

6. The positive electrode active material of claim 1, wherein the first coating layer has a composition represented by Formula 2:
[Formula 2] Liₓ[Ni_{z}Mn_{w}]_{y}O₂
wherein, in Formula 2, 0.8≤x≤1.2, 0.8≤y≤1.2, 0.1≤z≤0.9, and 0.1≤w≤0.9.

7. The positive electrode active material of claim 1, wherein a molar ratio of nickel : manganese, which are included in the first coating layer, is in a range of 1:9 to 9:1.

8. The positive electrode active material of claim 1, wherein a molar ratio of nickel : manganese, which are included in the first coating layer, is in a range of 5:5 to 9:1.

9. The positive electrode active material of claim 1, wherein the first coating layer is included in an amount of 1 part by weight to 5 parts by weight based on 100 parts by weight of the lithium transition metal oxide.

10. The positive electrode active material of claim 1, wherein the second coating layer comprises at least one selected from the group consisting of lithium boron oxide and boron oxide.

11. The positive electrode active material of claim 1, wherein the second coating layer is included in an amount of 0.01 part by weight to 1 part by weight based on 100 parts by weight of the lithium transition metal oxide.

12. The positive electrode active material of claim 1, wherein an amount of a lithium by-product remaining on a surface is 1 wt% or less based on a total weight of the positive electrode active material.

13. A method of preparing a positive electrode active material, the method comprising:
preparing a lithium transition metal oxide which is in a form of a secondary particle, in which a plurality of primary particles are aggregated, and has an amount of nickel among metallic elements excluding lithium of 80 atm% or more;
mixing the lithium transition metal oxide with a solution containing a nickel raw material and a manganese raw material and performing a first heat treatment to form a first coating layer containing nickel and manganese and having a layered structure on a surface of the secondary particle of the lithium transition metal oxide and surfaces of a portion or all of the plurality of primary particles; and
mixing the lithium transition metal oxide having the first coating layer formed thereon with a boron raw material and performing a second heat treatment to form a second coating layer containing boron on an outer surface of the first coating layer.

14. The method of claim 13, wherein the preparing of the lithium transition metal oxide is performed by mixing a lithium raw material with a positive electrode active material precursor and sintering the mixture.

15. The method of claim 13, wherein the preparing of the lithium transition metal oxide does not comprise a washing process.

16. The method of claim 13, wherein the nickel raw material is nickel nitrate, and the manganese raw material is manganese nitrate.

17. The method of claim 13, wherein the first heat treatment is performed at 650°C to 850°C.

18. The method of claim 13, wherein the boron raw material is boric acid.

19. The method of claim 13, wherein the second heat treatment is performed at 150°C to 500°C.

20. A positive electrode comprising the positive electrode active material of any one of claims 1 to 12.

21. A lithium secondary battery comprising the positive electrode of claim 20, a negative electrode, a separator disposed between the positive electrode and the negative electrode, and an electrolyte.
